# EUROPEAN PATENT APPLICATION

(11) **EP 4 682 346 A2**
(43) Date of publication of application: **21.01.2026**
(21) Application number: 25220212.2
(22) Date of filing: 21.07.2021
(51) Int. Cl.: E21B 33/12, E21B 17/02, E21B 33/00, E21B 33/03, E21B 33/04, E21B 33/128, F16L 17/073, F16J 15/08

(54) **BI-DIRECTIONAL SEAL ELEMENT AND SEALING SYSTEM**

(62) Divisional of application: 21950376.0
(71) Applicant: FMC Technologies Do Brasil LTDA, 21941-615 Rio de Janeiro (BR)
(72) Inventor: Andueza, Alejandro, 20551-100 Rio de Janeiro (BR); TREVISANI, Carlos Eduardo, Castro, 22775-033 Rio De Janeiro (BR)
(74) Representative: Acapo Onsagers AS

(57) **Abstract**

An annular seal element which includes a cylindrical seal body; first and second axially spaced sealing lips which are located on the seal body and are directed generally radially outwardly; first and second spaced-apart sealing flanges which extend radially outwardly from the seal body; and third and fourth sealing lips which are located on the first and second sealing flanges, respectively.

## Description

The present disclosure is directed to a bi-directional seal element and associated sealing system for sealing the junction between two components which when assembled form a sealed enclosure. In particular, the disclosure is directed to a bi-directional seal element and associated sealing system in which the seal element is configured to seal the external environment from pressure in the enclosure and to seal the enclosure from pressure in the external environment.

### BACKGROUND OF THE DISCLOSURE

Annular seal elements are commonly used to seal the junctions between pressure containing components in order to prevent the escape of internal pressure into the environment. In the subsea hydrocarbon production industry, for example, a variety of annular seal elements are used to seal between various components of the subsea hydrocarbon production system in order to prevent well fluids from leaking into the sea. One type of seal element which is prevalent in the subsea hydrocarbon production industry is the Straight Bore Metal Seal ("SBMS"). The SBMS seal is used in gate valve bonnets, subsea connectors, flow bores and generally throughout the subsea production system.

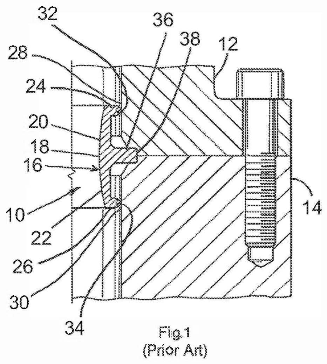

An example of a prior art SBMS metal-to-metal seal is shown in Figure 1, which is a cross sectional view of a portion of a valve of the type used, for example, in a gate valve. The seal element 10, which is shown installed between the bonnet 12 and the body 14 of the valve, includes a cylindrical seal body 16 having a central base section 18, two arm sections 20, 22 which extend axially outwardly in opposite directions from the base section, and two radially outwardly-oriented sealing lips 24, 26 which are positioned proximate the ends of the arm members. Each sealing lip 24, 26 is configured to sealingly engage a corresponding cylindrical sealing surface 28, 30 located on the bonnet 12 and the valve body, respectively. In addition, the arm sections 20, 22 are configured to mechanically energize the sealing lips 24, 26 against the sealing surfaces 28, 30. In this example, the sealing lips 24, 26 are provided with circular soft metal sealing inserts 32, 34 to enhance the ability of the sealing lips to form an effective seal against the sealing surfaces 28, 30. In addition, the seal element 10 is provided with a centering web 36 which extends radially outwardly from the base section 18 and is received in an annular groove 38 formed in the adjacent surfaces of the bonnet 12 and the valve body 14 to help retain the seal element in position in the valve.

The SBMS seal element is very effective in sealing an enclosure against high internal pressure. This is due to the fact that the internal pressure will force the arm sections radially outwardly and thereby energize the sealing lips against their corresponding sealing surfaces. Although this seal element will also seal the enclosure against relatively low external pressures, it is not designed to seal against the high external pressures normally encountered in ultra-deep water subsea installations, which can reach 5,000 psi or higher. In situations where the external pressure exceeds the internal pressure by a certain amount, the external pressure can force the arm sections radially inwardly and leak past the sealing lips into the enclosure.

Furthermore, although other types of prior art seal elements exist which are capable of providing bi-directional sealing functionality, such as BX and RX type gaskets, these seals are typically not pressure energizing and are also somewhat difficult to mechanically energize due to their relatively stiff cross sectional shapes.

### SUMMARY OF THE DISCLOSURE

In accordance with the present disclosure, an annular seal element is provided which comprises a cylindrical seal body; first and second axially spaced sealing lips which are located on the seal body and are directed generally radially outwardly; first and second spaced-apart sealing flanges which extend radially outwardly from the seal body; and third and fourth sealing lips which are located on the first and second sealing flanges, respectively.

In accordance with one aspect of the disclosure, the first and second sealing flanges define an intervening annular cavity which opens radially outwardly.

In accordance with another aspect of the disclosure, each of the third and fourth sealing lips is located on a side of its respective sealing flange located opposite the cavity.

In accordance with a further aspect of the disclosure, each of the first and second sealing flanges extends generally parallel to a transverse plane of the seal element.

In accordance with yet another aspect of the disclosure, at least one of the first and second sealing flanges extends at an angle greater than zero degrees but less than or equal to ninety degrees relative to a transverse plane of the seal element. In one example embodiment, both of the first and second sealing flanges extend at an angle greater than zero degrees but less than or equal to ninety degrees relative to the transverse plane of the seal element.

In accordance with one aspect of the disclosure, the third and fourth sealing lips are directed axially outwardly.

In accordance with another aspect of the disclosure, the third and fourth sealing lips are directed radially inwardly.

In accordance with a further aspect of the disclosure, at least one of the third and fourth sealing lips is directed axially outwardly and radially inwardly. In one exemplary embodiment, both of the third and fourth sealing lips are directed axially outwardly and radially inwardly.

The present disclosure is also directed to an annular seal element for sealing a junction between first and second components which when assembled define a pressure containing enclosure. In this embodiment, the seal element comprises first and second axially spaced sealing lips which are configured to sealingly engage respective first and second sealing surfaces on the first and second components to thereby seal an external environment from internal pressure in the enclosure; and third and fourth axially spaced sealing lips which are located radially outwardly of the first and second sealing lips and are configured to sealingly engage respective third and fourth sealing surfaces on the first and second components to thereby seal the enclosure from external pressure in the external environment.

In accordance with one aspect of the disclosure, the first and second sealing lips are energized against their respective first and second sealing surfaces by the internal pressure, and the third and fourth sealing lips are energized against their respective third and fourth sealing surfaces by the external pressure.

In accordance with another aspect of the disclosure, the first and second sealing lips are directed radially outwardly and the third and fourth sealing lips are directed axially outwardly.

In accordance with a further aspect of the disclosure, the first and second sealing lips are directed radially outwardly and at least one of the third and fourth sealing lips is directed radially inwardly.

In accordance with yet another aspect of the disclosure, the first and second sealing lips are directed radially outwardly and at least one of the third and fourth sealing lips is directed axially outwardly and radially inwardly.

In accordance with certain embodiments, the seal element may comprise a cylindrical seal body; and first and second spaced-apart sealing flanges which extend radially outwardly from the seal body. In this embodiment, the first and second sealing lips are located on the seal body and the third and fourth sealing lips are located on the first and second sealing flanges, respectively.

In accordance with one aspect of the disclosure, the first and second sealing flanges define an intervening annular cavity which opens radially outwardly.

In accordance with another aspect of the disclosure, each of the third and fourth sealing lips is located on a side of its respective sealing flange located opposite the cavity.

The present disclosure also provides a sealing system for sealing a junction between first and second components which when assembled define a pressure containing enclosure. In accordance with this embodiment, the sealing system includes an annular seal element comprising first and second axially spaced sealing lips configured to sealingly engage respective first and second sealing surfaces on the first and second components to thereby seal an external environment from internal pressure in the enclosure, and third and fourth axially spaced sealing lips located radially outwardly of the first and second sealing lips and configured to sealingly engage respective third and fourth sealing surfaces on the first and second components to thereby seal the enclosure from external pressure in the external environment.

In accordance with one aspect of the disclosure, the seal element comprises a cylindrical seal body and first and second spaced-apart sealing flanges which extend radially outwardly from the seal body. In this embodiment, the first and second axially spaced sealing lips are located on the seal body and are directed generally radially outwardly, and the third and fourth sealing lips are located on the first and second sealing flanges, respectively.

In accordance with another aspect of the disclosure,, the first and second sealing flanges define an intervening annular cavity which opens radially outwardly.

In accordance with a further aspect of the disclosure, each of the third and fourth sealing lips is located on a side of its respective sealing flange located opposite the cavity.

In accordance with yet another aspect of the disclosure, each of the first and second sealing flanges and the first and second sealing surfaces extends generally parallel to a transverse plane of the seal element.

In accordance with a further aspect of the disclosure, at least one of the first and second sealing flanges and its corresponding sealing surface extends at an angle greater than zero degrees but less than or equal to ninety degrees relative to a transverse plane of the seal element. In one example embodiment, both of the first and second sealing flanges and their corresponding sealing surfaces extend at an angle greater than zero degrees but less than or equal to ninety degrees relative to the transverse plane of the seal element.

Thus, the seal element of the present disclosure provides the ability to seal the external environment from pressure in the enclosure and to seal the enclosure from pressure in the external environment. An advantage of the seal element is the reduced force required for energization in comparison with traditional BX and RX seals. A complementary advantage is that the seal element requires a smaller outer diameter, which allows the equipment in which it is installed to be smaller and lighter.

These and other objects and advantages of the present disclosure will be made apparent from the following detailed description, with reference to the accompanying drawings. In the drawings, the same reference numbers may be used to denote similar components in the various embodiments.

### BRIEF DESCRIPTION OF THE DRAWINGS

Figure 1 is a partial cross sectional view of a prior art seal element shown installed between the two components;
Figure 2 is a cross sectional view of a first illustrative embodiment of the seal element of the present invention shown installed between the bonnet and valve body of a representative gate valve;
Figure 3 is an enlarged cross sectional view of the seal element shown in Figure 2;
Figure 4 is an exploded view of the right hand side of Figure 3;
Figure 5 is a schematic representation or a representative wellhead assembly showing the seal element of Figure 2 being used to seal various interfaces;
Figure 6 is an enlarged cross sectional view of the right hand side of a second illustrative embodiment of the seal element of the present invention shown installed between two components;
Figure 7 is an exploded view of the right hand side of Figure 6;
Figure 8 is an enlarged cross sectional view of the right hand side of a third illustrative embodiment of the seal element of the present invention shown installed between two components; and
Figure 9 is an exploded view of the right hand side of Figure 8.

### DETAILED DESCRIPTION

The present disclosure is directed to a seal element for sealing the junction between first and second components which when assembled define a pressure containing enclosure, such as, e.g., a flow bore or a valve cavity. In particular, the seal element is configured to seal the external environment from pressure in the enclosure and to seal the enclosure from pressure in the external environment. Thus, when the pressure in the enclosure is greater than the pressure in the external environment, the seal element will prevent fluid in the enclosure from leaking into the external environment. Likewise, when the pressure in the external environment is greater than the pressure in the enclosure, the seal element will prevent fluid in the external environment from infiltrating into the enclosure.

In order to achieve this functionality, the seal element includes first and second axially spaced sealing lips which are configured to sealingly engage respective first and second sealing surfaces on the first and second components so as to seal the external environment from pressure in the enclosure. The seal element also includes third and fourth axially spaced sealing lips which are located radially outwardly of the first and second sealing lips and are configured to sealingly engage respective third and fourth sealing surfaces on the first and second components so as to seal the enclosure from pressure in the external environment. In certain embodiments, the seal element may be configured such that pressure in the enclosure will energize the first and second sealing lips into engagement with the first and second sealing surfaces, while pressure in the external environment will energize the third and fourth sealing lips into engagement with third and fourth sealing surfaces. In the context of the present disclosure, the term "internal pressure" may be taken to mean the pressure contained radially within the seal element (e.g., the pressure in the enclosure), and the term "external pressure" may be taken to mean the pressure existing radially outside of the seal element (e.g., the pressure in the external environment).

In one embodiment, the first and second sealing lips are directed radially outwardly in order to engage radially inwardly oriented first and second sealing surfaces. Also, the third and fourth sealing lips are directed axially outwardly in order to engage axially inwardly oriented third and fourth sealing surfaces. In this regard, the term "axially outwardly" is the axial direction facing away from the axial center of the seal element, while the term "axially inwardly" is the axial direction facing toward the axial center of the seal element.

In an alternative embodiment, one of the third and fourth sealing lips is directed radially inwardly in order to engage a respective radially outwardly oriented sealing surface. In a further alternative embodiment, both of the third and fourth sealing lips are directed radially inwardly in order to engage respective radially outwardly oriented third and fourth sealing surfaces. In yet another embodiment, one of the third and fourth sealing lips is directed at an angle axially outwardly and radially inwardly in order to engage a matching angularly oriented sealing surface. In still another embodiment, both of the third and fourth sealing lips are directed at an angle axially outwardly and radially inwardly in order to engage matching angularly oriented third and fourth sealing surfaces.

In the context of the present disclosure, the sealing lips may comprise any configuration which is suitable for forming an effective pressure tight seal against a corresponding sealing surface on another component. For example, one or more of the sealing lips may be formed as an annular protuberance having an elliptical cross section (including a generally semi-circular cross section) or a rectilinear cross section (including a generally triangular cross section). Also, one or more of the sealing lips may be defined by an annular portion of the seal element which is suitably machined or otherwise treated so as to form an effective pressure tight seal against a corresponding sealing surface.

In one embodiment of the disclosure, the seal element includes a cylindrical seal body and first and second spaced-apart sealing flanges which extend radially outwardly from the seal body. In this embodiment, the first and second sealing lips are located on the seal body and the third and fourth sealing lips are located on the first and second sealing flanges, respectively. The seal body is configured so as to position the first and second sealing lips adjacent their respective first and second sealing surfaces, and the first and second sealing flanges are configured so as to position the third and fourth sealing lips adjacent their respective third and fourth sealing surfaces.

In a more specific embodiment of the disclosure, the first and second sealing flanges define an intervening annular cavity which opens radially outwardly. In this embodiment, each of the third and fourth sealing lips is formed on a side of its respective sealing flange located opposite the cavity. In this manner, pressure from the external environment which enters the cavity will tend to force the sealing flanges apart and thereby urge the third and fourth sealing lips into sealing engagement with the third and fourth sealing surfaces, respectively.

In one embodiment of the disclosure, each of the first and second sealing flanges extends generally parallel to the transverse plane of the seal element (i.e., the plane perpendicular to the axial centerline of the seal element). In an alternative embodiment, at least one of the first and second sealing flanges extends at an angle to the transverse plane. In a further alternative embodiment, both of the first and second sealing flanges extend at an angle to the transverse plane. In each of these embodiments, the regions of the first and second components located adjacent the first and second sealing surfaces may be configured to extend generally parallel to the first and second sealing flanges.

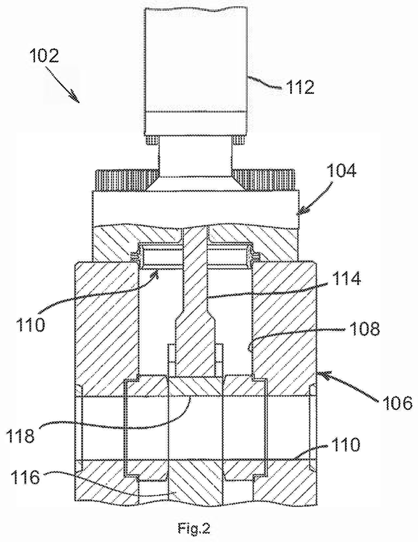

A first illustrative embodiment of the seal element of the present disclosure is shown in Figure 2. The seal element of this embodiment, indicated generally by reference number 100, is shown installed in a representative gate valve 102. In this example, the gate valve 102 includes a bonnet 104 which is mounted to a valve body 106 having a gate cavity 108 and a transverse flow bore 110. The bonnet 104 supports a valve actuator 112 which is connected via a valve stem 114 to a gate 116 having a through bore 118. The valve actuator 112 functions in a known manner to move the gate 116 so as to bring the through bore 118 into and out of alignment with the flow bore 110 to thereby open and close the gate valve, respectively. As shown in Figure 2, the seal element 100 is positioned in the gate valve 102 so as to seal the junction between the bonnet 104 and the valve body 106 and thereby isolate the gate cavity 108 from the external environment.

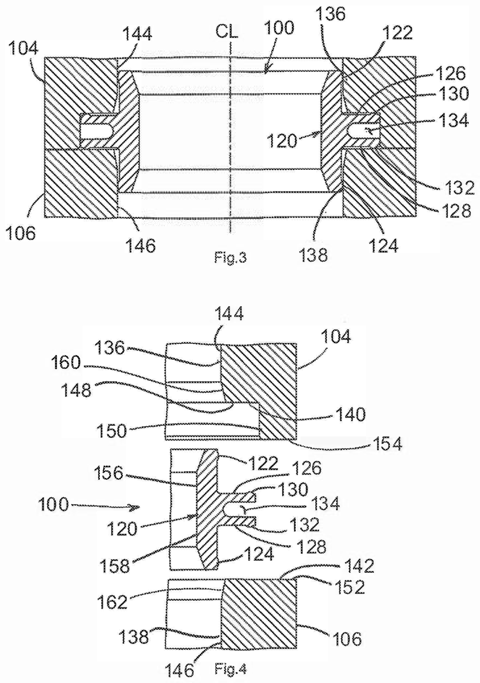

Referring also to Figures 3 and 4, the seal element 100 includes a cylindrical seal body 120, first and second axially spaced sealing lips 122, 124 formed on the seal body, first and second sealing flanges 126, 128 which extend radially outwardly from the seal body, and third and fourth axially spaced sealing lips 130, 132 formed on the first and second sealing flanges, respectively. In this example, the first and second sealing flanges 126, 128 define an intervening annular cavity 134 which opens radially outwardly, and each of the third and fourth sealing lips 130, 132 is formed on a side of its respective sealing flange located opposite the cavity. The role of the annular cavity 134 in enhancing the sealing effect of the sealing lips 130, 132 will be discussed below.

As illustrated in Figure 2, the seal element 100 forms part of a bi-directional sealing system for isolating the gate cavity 108 from the external environment, such as the sea. Accordingly, the bonnet 104 and the valve body 106 are provided with sealing surfaces configured to sealingly engaging the sealing lips. In this particular example, the first and second sealing lips 122, 124 are directed radially outwardly and are configured to sealingly engage corresponding radially inwardly facing first and second sealing surfaces 136, 138 formed respectively on the bonnet 104 and valve body 106. Also, the third and fourth sealing lips 130, 132 are directed axially outwardly and are configured to engage corresponding axially inwardly facing third and fourth sealing surfaces 140, 142 formed respectively on the bonnet 104 and valve body 106.

The first and second sealing surfaces 136, 138 may be located, e.g., on corresponding bores 144, 146 formed coaxially in the bonnet 104 and valve body 106, respectively. Also, the third sealing surface 140 may be located on the base 148 of a counterbore 150 formed in the bonnet 104, and the fourth sealing surface 142 may be located on a top surface 152 of the valve body 106 against which a bottom surface 154 of the bonnet 104 is positioned. In this embodiment, the base 148 and the top surface 152 may be configured to be generally parallel to the first and second sealing flanges 126, 128. Accordingly, when the gate valve 102 is assembled, the bonnet 104 and the valve body 106 will form a cylindrical cavity within which the first and second sealing flanges 126, 128 are received. As a result, the sealing flanges 126, 128 will assist in maintaining the seal element 100 properly positioned between the bonnet 104 and valve body 106.

In accordance with one embodiment of the disclosure, the seal element 100 is configured such that one or more of the sealing lips is pressure energized against its corresponding sealing surface. For example, the seal body 120 may be designed such that internal pressure will force the first and second sealing lips 122, 124 into tight sealing engagement with the first and second sealing surfaces 136, 138. This effect may be enhanced by providing the seal body 120 with first and second axially oppositely extending arms 156, 158 and locating each of the first and second sealing lips 122, 124 at or near the distal end of a respective arm. In this example, the arms 156, 158 may be designed to flex slightly under the anticipated internal pressure loads for a particular application so as to ensure that the sealing lips 122, 124 will engage the sealing surfaces 136, 138 with sufficient force to contain the internal pressure.

In addition or as an alternative to the arrangement just described, the seal element 100 may be configured such that external pressure will pressure energize the third and fourth sealing lips 130, 132 against the third and fourth sealing surfaces 140, 142. For example, in the embodiment of the disclosure in which the first and second sealing flanges 126, 128 are separated by the annular cavity 134 and the third and fourth sealing lips 130, 132 are located on the side of the sealing flanges located opposite the cavity, external pressure which enters the cavity through the junction between the bonnet 104 and valve body 106 will force the sealing flanges apart and thereby urge the third and fourth sealing lips into tight sealing engagement with the third and fourth sealing surfaces 140, 142. This effect may be enhanced by locating each sealing lip 130, 132 at or near the distal end of its respective sealing flange 126, 128. Additionally or alternatively, the sealing flanges 126, 128 may be designed to flex slightly under the anticipated external pressure loads for a particular application in order to ensure that the sealing lips 130, 132 will engage the sealing surfaces 140, 142 with sufficient force to contain the external pressure.

In accordance with another embodiment of the disclosure, the seal element 100 may be configured such that one or more of the sealing lips is mechanically energized against its corresponding sealing surface when the bonnet 104 is assembled with the valve body 106. For example, the seal body 120 may be designed such that the sealing lips 122, 124 form an interference fit with the bores 144, 146. In addition, the arms 156, 158 may be designed to flex radially inwardly during assembly to thereby preload the sealing lips 122, 124 against the sealing surfaces 136, 138. In this regard, the bonnet 104 and the bores 144, 146 may be provided with respective lead-in chamfers 160, 162 adjacent the sealing surfaces 136, 138 to aid in the radial displacement of the distal ends of the arms 156, 158 during assembly.

In addition or as an alternative to this arrangement, the sealing flanges 126, 128 may be configured such that the third and fourth sealing lips 130, 132 are mechanically energized against the third and fourth sealing surfaces 140, 142. For example, the sealing flanges 126, 128 may be designed such that the sealing lips 130, 132 form an interference fit with the sealing surfaces 140, 142. Additionally, the sealing flanges 126, 128 may be configured to flex axially inwardly during assembly of the bonnet cap 104 to the valve body 106 to thereby preload the sealing lips 130, 132 against the sealing surfaces 140, 142.

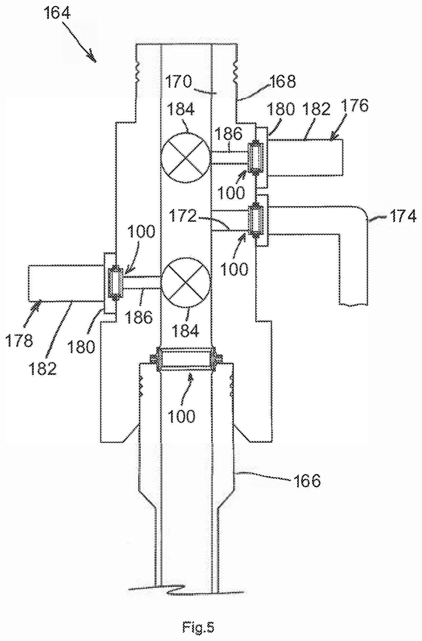

The seal elements described herein can be used in a variety of applications to seal the junction between two components which when assembled define a pressure containing enclosure. Referring to Figure 5, for example, several seal elements 100 are shown in use in a representative subsea production system 164 which includes a wellhead 166 mounted at the upper end of a well bore and a christmas tree 168 mounted on top of the wellhead. In this simplified example, the christmas tree 168 includes an axial production bore 170, a lateral production outlet 172, a flowline 174 connected to the production outlet, and a number of valves 176, 178 for controlling the flow of production fluid through the production bore and the production outlet. Also, each valve 176 includes a bonnet 180 which is mounted to the tree body, an actuator 182 which is supported on the bonnet, and a valve member 184 which is connected to the actuator by a valve stem (not shown) which extends through a corresponding stem bore 186 in the tree body.

In this example, a first seal element 100 is used to seal the junction between the wellhead 166 and the christmas tree 168 in order to isolate the well bore and the production bore 170 from the external environment (i.e., the sea). Also, a second seal element is used to seal the junction between the flowline 174 and the tree body in order to isolate the production bore 170, the production outlet 172 and the flowline from the external environment. Finally, each of two additional seal elements is used to seal a corresponding junction between the bonnet 180 and the tree body in order to isolate the stem bore 186 from the external environment. It should be understood that any of the seal element embodiments described herein could be used in these or any other applications.

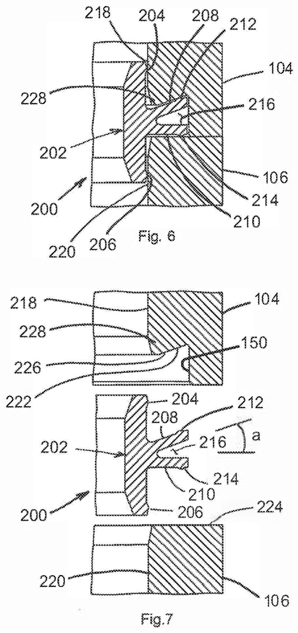

A second embodiment of the seal element of the present disclosure is shown in Figures 6 and 7. The seal element of this embodiment, indicated generally by reference number 200, is shown for illustrative purposes installed at the junction between two components, such as the bonnet 104 and the valve body 106 described above. The seal element 200 is similar in many aspects to the seal element 100 described above. Accordingly, the seal element 200 comprises a cylindrical seal body 202, first and second axially spaced sealing lips 204, 206 which are located on the seal body, first and second sealing flanges 208, 210 which extend radially outwardly from the seal body, and third and fourth sealing lips 212, 214 which are located on the first and second sealing flanges, respectively. Similar to the seal element 100, the sealing flanges 208, 210 define an intervening annular cavity 216 which opens radially outwardly, and each of the third and fourth sealing lips 212, 214 is formed on a side of its respective sealing flange located opposite the cavity. Also, the first and second sealing lips 204, 206 are directed radially outwardly and are configured to sealingly engage corresponding radially inwardly facing first and second sealing surfaces 218, 220 formed on the bonnet 104 and valve body 106, respectively.

In contrast to the seal element 100, however, only one of the third and fourth sealing lips 212, 214 is directed axially outwardly. The other of the third and fourth sealing lips 212, 214 is directed axially outwardly and radially inwardly. This configuration may be accomplished, for example, by orienting one of the sealing flanges 208, 210 at an angle to the transverse plane P of the seal element 200 (i.e., the plane perpendicular to the axial centerline of the seal element). In this example, the first sealing flange 208 is oriented at an angle **a** relative to the transverse plane P. In this orientation, the third sealing lip 212 will be directed both axially outwardly and radially inwardly. Angle **a** may have any value greater than 0° but less than or equal to 90°. In the specific embodiment of the seal element shown in Figures 6 and 7, angle **a** is approximately 20° to 30°. In this illustrative embodiment, the second sealing flange 210 is oriented generally parallel to the transverse plane P of the seal element 200, and the fourth sealing lip 214 is accordingly oriented axially inwardly.

The third and fourth sealing lips 212, 214 are configured to sealingly engage corresponding third and fourth sealing surfaces 222, 224 formed on the bonnet 104 and the valve body 106, respectively. In order to accommodate the orientation of the first sealing flange 208 and/or the third sealing lip 212, the third sealing surface 222 may be configured to be generally parallel to the first sealing flange. Accordingly, the third sealing surface 222 may be formed on an undercut 226 in the counterbore 150 of the bonnet 104 which is oriented at approximately the same angle as angle **a.** An advantage of this arrangement is that the undercut 226 forms a rim 228 in the body of the bonnet 104 which serves to lock the sealing flange 208 in position and thereby resist radial movement of the seal element 200 in response to high external pressures.

The seal element 200 may be similar in many respects to the seal element 100 described above. For example, the seal element 200 may be designed such that internal pressure will energize the first and second sealing lips 204, 206 against their corresponding sealing surfaces and external pressure will energize the third and fourth sealing lips 212, 214 against their corresponding sealing surfaces. Likewise, the seal element 200 may be configured such that the first and second sealing lips 204, 206 and/or the third and fourth sealing lips 212, 214 are mechanically energized against their corresponding sealing surfaces during assembly of the bonnet 104 to the valve body 106.

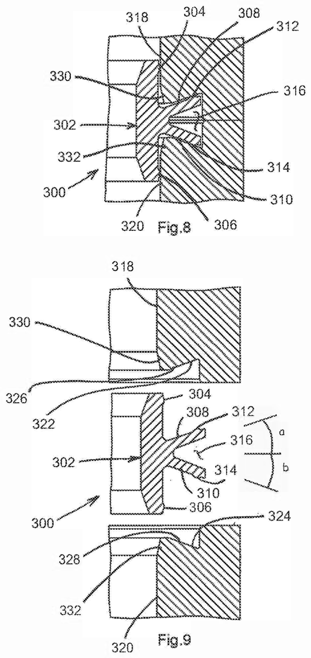

A third embodiment of the seal element of the present disclosure is shown in Figures 8 and 9. The seal element of this embodiment, which is indicated generally by reference number 300, is shown for illustrative purposes installed at the junction between two components, such as the bonnet 104 and the valve body 106 described above. The seal element 300 is similar to the seal element 200 just described. Thus, the seal element 300 includes a cylindrical seal body 302, first and second axially spaced sealing lips 304, 306 which are located on the seal body, first and second sealing flanges 308, 310 which extend radially outwardly from the seal body, and third and fourth sealing lips 312, 314 which are located on the first and second sealing flanges, respectively. The sealing flanges 308, 310 define an intervening annular cavity 316 which opens radially outwardly, and each of the third and fourth sealing lips 312, 314 is formed on a side of its respective sealing flange located opposite the cavity. Also, the first and second sealing lips 304, 306 are directed radially outwardly and are configured to sealingly engage corresponding radially inwardly facing first and second sealing surfaces 318, 320 formed on the bonnet 104 and valve body 106, respectively.

Whereas in the seal element 200 only one of the third and fourth sealing lips 212, 214 is directed axially outwardly and radially inwardly, in the seal element 300 both of the third and fourth sealing lips 312, 314 are directed axially outwardly and radially inwardly. This configuration may be accomplished, for example, by orienting the first and second sealing flanges 308, 310 at respective angles **a, b** relative to the transverse plane P of the seal element 300 (i.e., the plane perpendicular to the axial centerline of the seal element). Each of the angles **a, b** may have any value greater than 0° but less than or equal to 90°. In the specific embodiment of the seal element 300 shown in Figures 8 and 9, angles **a, b** are equal and are approximately 20° to 30°.

The third and fourth sealing lips 312, 314 are configured to sealingly engage corresponding third and fourth sealing surfaces 322, 324 formed respectively on the bonnet 104 and the valve body 106. The third and fourth sealing surfaces 322, 324 may be configured to be generally parallel to the first and second sealing flanges 308, 310, respectively. Thus, the third and fourth sealing surfaces 322, 324 may be located on corresponding undercuts 326, 328 formed respectively in the bonnet 104 and the valve body 106, and each undercut may be oriented at approximately the same angle **a, b** as its adjacent sealing flange. Similar to the undercut 228 in the previous embodiment, the undercuts 326, 328 form corresponding rims 330, 332 in the bonnet 104 and valve body 106 which serve to lock the sealing flanges 308, 310 in position and thereby resist radial movement of the seal element 300 in response to high external pressures.

The seal element 300 may be similar in many aspects to the seal elements 100, 200 described above. For example, the seal element 300 may be designed such that internal pressure will energize the first and second sealing lips 304, 306 against their corresponding sealing surfaces and external pressure will energize the third and fourth sealing lips 312, 314 against their corresponding sealing surfaces. Likewise, the seal element 300 may be configured such that the first and second sealing lips 304, 306 and/or the third and fourth sealing lips 312, 314 are mechanically energized against their corresponding sealing surfaces during assembly of the bonnet 104 to the valve body 106.

It should be recognized that, while the present disclosure has been presented with reference to certain embodiments, those skilled in the art may develop a wide variation of structural and operational details without departing from the principles of the disclosure. For example, the various elements shown in the different embodiments may be combined in a manner not illustrated above. Therefore, the following claims are to be construed to cover all equivalents falling within the true scope and spirit of the disclosure.

### Clauses:

1. An annular seal element which comprises:
   a cylindrical seal body;
   first and second axially spaced sealing lips which are located on the seal body and are directed generally radially outwardly;
   first and second spaced-apart sealing flanges which extend radially outwardly from the seal body; and
   third and fourth sealing lips which are located on the first and second sealing flanges, respectively.
2. The seal element of clause 1, wherein the first and second sealing flanges define an intervening annular cavity which opens radially outwardly.
3. The seal element of clause 2, wherein each of the third and fourth sealing lips is located on a side of its respective sealing flange located opposite the cavity.
4. The seal element of clause 3, wherein each of the first and second sealing flanges extends generally parallel to a transverse plane of the seal element.
5. The seal element of clause 3, wherein at least one of the first and second sealing flanges extends at an angle greater than zero degrees but less than or equal to ninety degrees relative to a transverse plane of the seal element.
6. The seal element of clause 5, wherein both of the first and second sealing flanges extend at an angle greater than zero degrees but less than or equal to ninety degrees relative to the transverse plane of the seal element.
7. The seal element of clause 2, wherein the third and fourth sealing lips are directed axially outwardly.
8. The seal element of clause 2, wherein the third and fourth sealing lips are directed radially inwardly.
9. The seal element of clause 2, wherein at least one of the third and fourth sealing lips is directed axially outwardly and radially inwardly.
10. The seal element of clause 2, wherein both of the third and fourth sealing lips are directed axially outwardly and radially inwardly.
11. An annular seal element for sealing a junction between first and second components which when assembled define a pressure containing enclosure, the seal element comprising:
   first and second axially spaced sealing lips which are configured to sealingly engage respective first and second sealing surfaces on the first and second components to thereby seal an external environment from internal pressure in the enclosure; and
   third and fourth axially spaced sealing lips which are located radially outwardly of the first and second sealing lips and are configured to sealingly engage respective third and fourth sealing surfaces on the first and second components to thereby seal the enclosure from external pressure in the external environment.
12. The seal element of clause 11, wherein the first and second sealing lips are energized against their respective first and second sealing surfaces by the internal pressure, and the third and fourth sealing lips are energized against their respective third and fourth sealing surfaces by the external pressure.
13. The seal element of clause 12, wherein the first and second sealing lips are directed radially outwardly and the third and fourth sealing lips are directed axially outwardly.
14. The seal element of clause 12, wherein the first and second sealing lips are directed radially outwardly and at least one of the third and fourth sealing lips is directed radially inwardly.
15. The seal element of clause 12, wherein the first and second sealing lips are directed radially outwardly and at least one of the third and fourth sealing lips is directed axially outwardly and radially inwardly.
16. The seal element of any of clauses 13-15, further comprising:
   a cylindrical seal body; and
   first and second spaced-apart sealing flanges which extend radially outwardly from the seal body;
   wherein the first and second sealing lips are located on the seal body and the third and fourth sealing lips are located on the first and second sealing flanges, respectively.
17. The seal element of clause 16, wherein the first and second sealing flanges define an intervening annular cavity which opens radially outwardly.
18. The seal element of clause 17, wherein each of the third and fourth sealing lips is located on a side of its respective sealing flange located opposite the cavity.
19. A sealing system for sealing a junction between first and second components which when assembled define a pressure containing enclosure, the sealing system comprising:
   an annular seal element comprising:
   first and second axially spaced sealing lips which are configured to sealingly engage respective first and second sealing surfaces on the first and second components to thereby seal an external environment from internal pressure in the enclosure; and
   third and fourth axially spaced sealing lips which are located radially outwardly of the first and second sealing lips and are configured to sealingly engage respective third and fourth sealing surfaces on the first and second components to thereby seal the enclosure from external pressure in the external environment.
20. The sealing system of clause 19, wherein the seal element comprises:
   a cylindrical seal body; and
   first and second spaced-apart sealing flanges which extend radially outwardly from the seal body;
   wherein the first and second axially spaced sealing lips are located on the seal body and are directed generally radially outwardly; and
   wherein the third and fourth sealing lips are located on the first and second sealing flanges, respectively.
21. The sealing system of clause 20, wherein the first and second sealing flanges define an intervening annular cavity which opens radially outwardly.
22. The sealing system of clause 21, wherein each of the third and fourth sealing lips is located on a side of its respective sealing flange located opposite the cavity.
23. The sealing system of clause 22, wherein each of the first and second sealing flanges and the first and second sealing surfaces extends generally parallel to a transverse plane of the seal element.
24. The sealing system of clause 22, wherein at least one of the first and second sealing flanges and its corresponding sealing surface extends at an angle greater than zero degrees but less than or equal to ninety degrees relative to a transverse plane of the seal element.
25. The sealing system of clause 24, wherein both of the first and second sealing flanges and their corresponding sealing surfaces extend at an angle greater than zero degrees but less than or equal to ninety degrees relative to the transverse plane of the seal element.

## Claims

1. An annular seal element (100, 200, 300) which comprises:
a cylindrical seal body (120, 202, 302);
first and second axially spaced sealing lips (122, 124, 204, 206, 304, 306) which are located on the seal body (120, 202, 302) and are directed generally radially outwardly;
first and second spaced-apart sealing flanges (126, 128, 208, 210, 308, 310) which extend radially outwardly from the seal body (120, 202, 302); and
third and fourth sealing lips (130, 132, 212, 214, 312, 314) which are located on the first and second sealing flanges (126, 128, 208, 210, 308, 310), respectively.

2. The seal element (100, 200, 300) of claim 1, wherein the first and second sealing flanges (126, 128, 208, 210, 308, 310) define an intervening annular cavity (134, 216, 316) which opens radially outwardly.

3. The seal element (100, 200, 300) of claim 2, wherein each of the third and fourth sealing lips (130, 132, 212, 214, 312, 314) is located on a side of its respective sealing flange located opposite the cavity (134, 216, 316).

4. The seal element (100, 200, 300) of claim 3, wherein each of the first and second sealing flanges (126, 128, 208, 210, 308, 310) extends generally parallel to a transverse plane of the seal element (100, 200, 300).

5. The seal element (100, 200, 300) of claim 3, wherein at least one of the first and second sealing flanges (126, 128, 208, 210, 308, 310) extends at an angle greater than zero degrees but less than or equal to ninety degrees relative to a transverse plane of the seal element (100, 200, 300).

6. The seal element (100, 200, 300) of claim 5, wherein both of the first and second sealing flanges (126, 128, 208, 210, 308, 310) extend at an angle greater than zero degrees but less than or equal to ninety degrees relative to the transverse plane of the seal element (100, 200, 300).

7. The seal element (100, 200, 300) of claim 2, wherein the third and fourth sealing lips (130, 132, 212, 214, 312, 314) are directed axially outwardly.

8. The seal element (200, 300) of claim 2, wherein the third and fourth sealing lips (212, 214) are directed radially inwardly.

9. The seal element (200) of claim 2, wherein at least one of the third and fourth sealing lips (212, 214) is directed axially outwardly and radially inwardly.

10. The seal element (300) of claim 2, wherein both of the third and fourth sealing lips (312, 314) are directed axially outwardly and radially inwardly.

11. A sealing system for sealing a junction between first and second components which when assembled define a pressure containing enclosure, the sealing system comprising:
an annular seal element (100, 200, 300) comprising:
first and second axially spaced sealing lips (122, 124, 204, 206, 304, 306) which are configured to sealingly engage respective first and second sealing surfaces (136, 138, 218, 220, 318, 320) on the first and second components to thereby seal an external environment from internal pressure in the enclosure; and
third and fourth axially spaced sealing lips (130, 132, 212, 214, 312, 314) which are located radially outwardly of the first and second sealing lips (122, 124, 204, 206, 304, 306) and are configured to sealingly engage respective third and fourth sealing surfaces (140, 142, 222, 224, 322, 324) on the first and second components to thereby seal the enclosure from external pressure in the external environment.

12. The sealing system of claim 11, wherein the seal element (100, 200, 300) comprises:
a cylindrical seal body (120, 202, 302); and
first and second spaced-apart sealing flanges (126, 128, 208, 210, 308, 310) which extend radially outwardly from the seal body (120, 202, 302);
wherein the first and second axially spaced sealing lips (122, 124, 204, 206, 304, 306) are located on the seal body (120, 202, 302) and are directed generally radially outwardly; and
wherein the third and fourth sealing lips (130, 132, 212, 214, 312, 314) are located on the first and second sealing flanges (126, 128, 208, 210, 308, 310), respectively.

13. The sealing system of claim 12, wherein the first and second sealing flanges (126, 128, 208, 210, 308, 310) define an intervening annular cavity (134, 216, 316) which opens radially outwardly.

14. The sealing system of claim 13, wherein each of the third and fourth sealing lips (130, 132, 212, 214, 312, 314) is located on a side of its respective sealing flange located opposite the cavity (134, 216, 316).

15. The sealing system of claim 14, wherein each of the first and second sealing flanges (126, 128) and the first and second sealing surfaces (136, 138) extends generally parallel to a transverse plane of the seal element (100).

16. The sealing system of claim 14, wherein at least one of the first and second sealing flanges (208, 210, 308, 310) and its corresponding sealing surface extends at an angle greater than zero degrees but less than or equal to ninety degrees relative to a transverse plane of the seal element (200, 300).

17. The sealing system of claim 16, wherein both of the first and second sealing flanges (308, 310) and their corresponding sealing surfaces extend at an angle greater than zero degrees but less than or equal to ninety degrees relative to the transverse plane of the seal element (300).
